# DEMANDE DE BREVET EUROPEEN

(11) **EP 2 492 587 A1**
(43) Date de publication de la demande: **29.08.2012**
(21) Numéro de dépôt: 12156960.2
(22) Date de dépôt: 24.02.2012
(51) Int. Cl.: F21V 19/00, F21S 8/12, B60Q 1/12, F21W 101/10

(54) **Dispositif d'éclairage et/ou de signalisation à actionneur opposé au dispositif de commande d'une source lumineuse**

(30) Priorité: 25.02.2011 FR 1151550
(71) Demandeur: Valeo Vision, 93012 Bobigny (FR)
(72) Inventeur: Letoumelin, Rémi, 77700 CHESSY (FR); Masse, Jean, 95130 FRANCONVILLE (FR)

(57) **Abrégé**

L'invention concerne un dispositif d'éclairage et/ou de signalisation comprenant un dispositif lumineux 7 formé par une source lumineuse et un dispositif de commande 3 de ladite source, un châssis 13 et un réflecteur 14, ledit réflecteur 14 étant monté pivotant autour d'un axe 18 passant par le châssis 13 et mis en mouvement autour de l'axe 18 au moyen d'un actionneur 23 solidaire du châssis 13, ledit dispositif d'éclairage et/ou de signalisation étant partagé en une première partie 21 et une seconde partie 20 par un plan 22 passant par la source lumineuse et perpendiculaire à l'axe 18, caractérisé en ce que le dispositif de commande 3 et la source lumineuse forment un ensemble unitaire où le dispositif de commande 3 s'étend majoritairement dans la seconde partie 20 alors que l'actionneur 23 s'étendant dans la première partie 21.

## Description

La présente invention concerne un dispositif d'éclairage et/ou de signalisation pour véhicule, tel qu'un projecteur elliptique ou analogue, et relève plus particulièrement de l'organisation des éléments constitutifs d'un tel dispositif les uns par rapport aux autres.

On connaît différents types de projecteurs classiques, parmi lesquels on trouve essentiellement :
- des feux de position, d'intensité et de portée faible ;
- des feux de croisement, ou codes, d'intensité plus forte et de portée sur la route avoisinant 80 mètres, qui sont utilisés essentiellement la nuit et dont la répartition du faisceau lumineux est telle qu'elle permet de ne pas éblouir le conducteur d'un véhicule croisé ; les faisceaux lumineux de type code sont différents avec le type de circulation, à gauche ou à droite, dans laquelle ils sont utilisés ;
- des feux de route longue portée, dont la zone de vision sur la route avoisine 300 mètres, et qui doivent être éteints lorsque l'on croise un autre véhicule afin de ne pas éblouir son conducteur ;
- des feux anti-brouillard...

Ces projecteurs de type classique ont été améliorés par l'emploi d'une nouvelle source lumineuse qui nécessite l'emploi d'un dispositif de commande haute tension et de forte puissance. Le dégagement thermique de ce dispositif de commande est important et il faut en assurer le refroidissement. Cette contrainte rend incompatible le montage de ce dispositif de commande à proximité de la source lumineuse installée dans le projecteur.

Par ailleurs, ces projecteurs à dispositif de commande déporté sont en général équipés d'un système permettant d'orienter le faisceau lumineux sur la droite ou sur la gauche du véhicule, par exemple quand ce dernier emprunte un virage. Ce système est connu sous l'abréviation « DBL » de l'anglais Dynamic Bending Light.

Cependant, ces projecteurs équipés à la fois d'un dispositif de commande déporté et d'un DBL souffrent d'inconvénients majeurs.

En effet, la contrainte de refroidissement du dispositif de commande génère des difficultés techniques qui entraînent des surcoûts. Par exemple, l'emploi de la haute tension entre le dispositif de commande et la source lumineuse implique une émission de perturbations électromagnétiques, les câbles installés entre ces deux composants se comportant alors comme des antennes de rayonnement. Pour contrecarrer ce défaut, on blinde le dispositif de commande, les câbles et le culot de la source lumineuse, ce qui se traduit par une augmentation des coûts.

Un rapprochement entre la source lumineuse et le dispositif de commande peut être envisagé mais celui-ci provoque de nouvelles difficultés techniques, en particulier une interférence mécanique entre le dispositif de commande de la source lumineuse et certains composants du système DBL.

Les concepteurs de la présente invention ont pris en compte ces différents aspects et divulgue ici un dispositif d'éclairage et/ou de signalisation qui résout les inconvénients décrits ci-dessus principalement en installant l'actionneur du système DBL à l'opposé du module de commande de la source lumineuse par rapport à un plan passant par cette dernière.

L'invention a donc pour objet un dispositif d'éclairage et/ou de signalisation comprenant un dispositif lumineux formé par une source lumineuse et un dispositif de commande de ladite source, un châssis et un réflecteur, ledit réflecteur étant monté pivotant autour d'un axe passant par le châssis et mis en mouvement autour de l'axe au moyen d'un actionneur solidaire du châssis, ledit dispositif d'éclairage et/ou de signalisation étant partagé en une première partie et une seconde partie par un plan passant par la source lumineuse et perpendiculaire à l'axe, innovant en ce que le dispositif de commande et la source lumineuse forment un ensemble notamment unitaire où le dispositif de commande s'étend majoritairement dans la seconde partie alors que l'actionneur s'étend dans la première partie.

On comprend ici que l'actionneur est installé sur le châssis dans une zone située à l'opposé d'un volume où s'étend le dispositif de commande accolé à la source lumineuse. Une fois installée dans un projecteur ou sur un véhicule, l'invention est remarquable en ce que l'actionneur est placé dans la partie supérieure du dispositif selon l'invention, c'est-à-dire au dessus de la source lumineuse et son dispositif de commande. Autrement dit, l'actionneur est installé en haut du dispositif d'éclairage selon une direction verticale.

Selon une première caractéristique de l'invention, l'actionneur s'étend majoritairement dans la première partie.

Selon une deuxième caractéristique de l'invention, l'actionneur s'étend exclusivement dans la première partie.

Selon une autre caractéristique de l'invention, la source lumineuse est une lampe à décharge et le dispositif de commande comprend un ballast d'alimentation électrique de la lampe à décharge.

Selon encore une caractéristique de l'invention, le dispositif de commande comprend un boîtier, réalisé en un matériau conducteur d'électricité, qui enferme le ballast. Ce boîtier forme ainsi une enveloppe qui entoure entièrement le ballast.

Selon encore une autre caractéristique de l'invention, le réflecteur comprend un arbre monté coaxial à l'axe, le châssis comprenant un premier palier de réception de l'arbre alors que l'actionneur comprend un second palier de réception de l'arbre.

Avantageusement, l'actionneur est rendu solidaire du châssis par au moins un rail issu de l'actionneur et monté coulissant dans au moins une glissière issue du châssis.

Avantageusement encore, le dispositif selon l'invention prévoit un volet de gestion du faisceau lumineux émis par la source lumineuse, ledit volet étant mis en mouvement par un actuateur solidaire du châssis.

Enfin, l'invention vise un projecteur, phare ou optique de phare pour véhicule automobile comprenant au moins un dispositif d'éclairage et/ou de signalisation réalisé selon l'une quelconque des caractéristiques évoquées ci-dessus.

Un avantage selon l'invention réside dans la possibilité de concilier l'emploi d'une source lumineuse à dispositif de commande intégré avec un système d'éclairage rotatif de type DBL.

D'autres caractéristiques, détails et avantages de l'invention ressortiront plus clairement à la lecture de la description donnée ci-après à titre indicatif en relation avec des dessins dans lesquels :
- la figure 1 est une vue schématique illustrant un dispositif lumineux de l'art antérieur où le dispositif de commande est séparé de la source lumineuse,
- la figure 2 est une vue de côté du dispositif lumineux intégré utilisé dans l'invention,
- la figure 3 est une vue de côté du dispositif d'éclairage et/ou de signalisation selon l'invention,
- la figure 4 est une vue en perspective de ce dispositif d'éclairage et/ou de signalisation.

Il faut noter que les figures exposent l'invention de manière détaillée pour mettre en oeuvre l'invention, lesdites figures pouvant bien entendu servir à mieux définir l'invention le cas échéant.

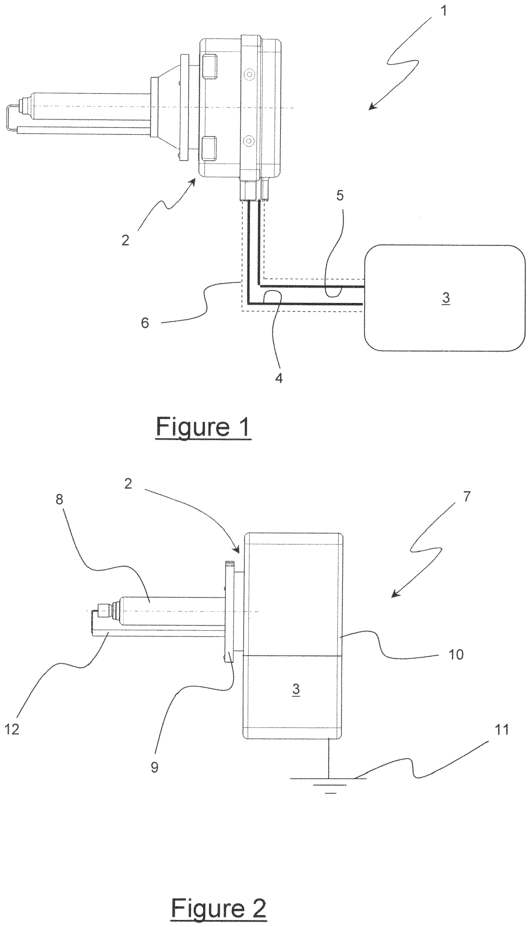

La figure 1 montre un dispositif lumineux 1 utilisé dans l'art antérieur. Ce dispositif lumineux 1 est constitué par une source lumineuse 2 où le faisceau de lumière prend naissance. Cette source lumineuse 2 est reliée à un dispositif de commande 3 par exemple par trois câbles électriques (dont deux 4 et 5 sont représentés) qui assurent le transport de l'énergie électrique depuis le dispositif de commande 3 vers la source lumineuse 2. Compte tenu de la taille et des besoins en refroidissement de ce dispositif de commande, il ne peut pas être installé au voisinage du dispositif d'éclairage qui reçoit un tel dispositif lumineux. C'est pourquoi le dispositif de commande 3 est monté sur le véhicule en un endroit suffisamment grand pour le recevoir et aéré pour en assurer le refroidissement. La distance qui sépare ce dispositif de commande 3 et la source lumineuse 2 correspond alors à la longueur des câbles 4 et 5. On notera par ailleurs que ces derniers sont enfermés dans un blindage 6 qui forme une protection périphérique autour des câbles afin d'empêcher toute émission de perturbation électromagnétique. Ces dispositions compliquent la structure du dispositif lumineux et augmente le coût de la fonction.
La figure 2 montre un dispositif lumineux 7 qui fait partie du dispositif d'éclairage et/ou de signalisation selon l'invention. Ce dispositif lumineux 7 se distingue de celui illustré sur la figure 1 en ce que la source lumineuse 2 et le dispositif de commande 3 sont rassemblés pour former un dispositif lumineux 7 monolithique. Autrement dit, la source lumineuse 2 et son dispositif de commande 3 forment une ensemble unitaire en ce sens que le dispositif de commande 3 est fixé ou solidarisé sur la source lumineuse 2.

Cette source lumineuse 2 comprend un bulbe 8 aux extrémités duquel est présent une électrode ou un émetteur. Le faisceau lumineux est ainsi créé par un arc électrique généré par une différence de potentiels électriques élevée appliquée entre chacune des électrodes.

Le bulbe 8 est relié à un culot 9 dont la fonction est d'assurer la liaison mécanique du dispositif lumineux 7 sur le dispositif d'éclairage et/ou de signalisation. Le dispositif de commande 3 est intégré dans un boîtier 10, ce dernier étant avantageusement réalisé dans un matériau conducteur d'électricité de sorte à former un blindage autour des composants électroniques constitutifs du dispositif de commande 3. Ce matériau est par exemple métallique, notamment en aluminium ou en acier.

Ce boîtier est relié électriquement à une masse électrique 11, par exemple du véhicule, par laquelle la charge électromagnétique captée par le boîtier peut être évacuée.

L'une des électrodes présente dans le bulbe 8 est reliée au dispositif de commande 3 par un brin conducteur d'électricité référencé 12. On notera que ce brin 12 chemine de manière rectiligne sous le bulbe 8 quand le dispositif lumineux est installé dans une position d'utilisation, par exemple sur le véhicule.

La source lumineuse 2 est par exemple une lampe à décharge, utilisant par exemple un gaz de type Xénon. Le dispositif de commande comprend des composants électroniques qui forment un ballast d'alimentation électrique de la lampe à décharge. Ce ballast permet de fournir la haute tension nécessaire à l'allumage de la lampe à décharge tout en limitant cette tension une fois la lampe allumée.

La puissance du dispositif lumineux utilisé dans l'invention est avantageusement de 25 W pour un flux lumineux égal à 2000 Lumens.

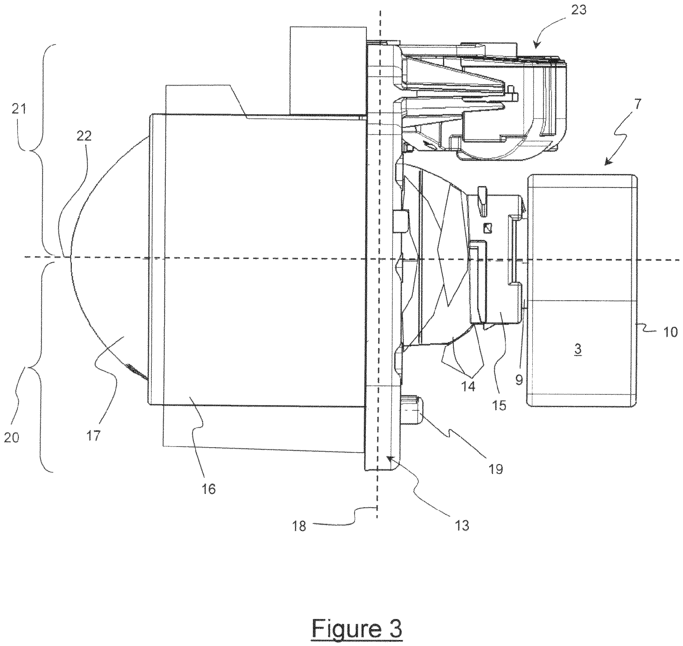

La figure 3 montre en détail un exemple de réalisation du dispositif d'éclairage et/ou de signalisation selon l'invention.

La source lumineuse 2 et le dispositif de commande 3, formant le dispositif lumineux 7 tel que décrit à la figure 2, sont installés dans le dispositif d'éclairage et/ou de signalisation selon l'invention.

Ce dernier comprend ladite source lumineuse contrôlée par le dispositif de commande 3. Cette source lumineuse et ce dispositif de commande, en particulier le ballast qu'il constitue, forment une ensemble unitaire. On entend par unitaire le fait qu'une séparation du dispositif de commande 3 d'avec la source lumineuse entraîne la destruction de l'un ou l'autre de ces deux composants.

Le dispositif d'éclairage et/ou de signalisation comprend encore un châssis 13 dont la fonction est de former une armature mécanique pour recevoir les différents composants constituant le dispositif d'éclairage et/ou de signalisation.

Ce châssis peut également être appelé support. Il est notamment réalisé par moulage d'un matériau plastique et forme un cadre périphérique plan et évidé en son centre.

Ce châssis 13 comprend au moins un pion de centrage 19 dont la fonction est d'assurer un alignement du dispositif d'éclairage et/ou de signalisation vis-à-vis de la pièce qui reçoit ce dispositif, par exemple un projecteur de véhicule automobile ou une tôle de face avant d'un véhicule.

Dans cette zone évidée, on trouve un réflecteur 14 qui forme un cuvelage évasée depuis un manchon 15 de fixation du culot 9 formé sur la source lumineuse. Ce réflecteur 14 s'étend de part et d'autre du châssis 13, l'extrémité du réflecteur 14 opposée au manchon 15 étant terminée par une bague 16 et une lentille 17. Le réflecteur 14 présente une paroi interne hautement réflectrice afin de renvoyer les rayons du faisceau lumineux générés par la source lumineuse vers la lentille 17.

La bague 16 forme un porte-lentille dont la fonction est de maintenir mécaniquement la lentille par rapport au châssis 13. Ce maintien doit être réalisé en alignant la lentille 17 sur un axe optique qui passe par la source lumineuse, en particulier par l'arc formé à l'intérieur du bulbe quand le dispositif lumineux est activé.

Le réflecteur 14 présente un degré de liberté par rapport au châssis 13. Ce degré de liberté assure la fonction DBL en autorisant une rotation du réflecteur 14, équipé de la source lumineuse et de son dispositif de commande 3, autour d'un axe 18. Ce mouvement de rotation est réalisé par rapport au châssis 13 et on comprend que l'axe 18 croise un bord périphérique du châssis.

Le dispositif d'éclairage et/ou de signalisation selon l'invention est partagé en une première partie référencée 21 et une seconde partie référencée 20. Cette séparation est opérée par un plan 22 qui passe par la source lumineuse, en particulier par une direction centrale du bulbe formant la source lumineuse, et situé de manière orthogonale par rapport à l'axe 18. Ce plan 22 découpe donc virtuellement le dispositif d'éclairage et/ou de signalisation en deux parties sensiblement identiques.

En position montée du dispositif d'éclairage et/ou de signalisation, par exemple sur un véhicule ou dans un projecteur ou phare pour véhicule, la première partie 21 est située dans le prolongement et au-dessus de la seconde partie 20 selon une direction verticale.

Le dispositif de commande 3 s'étend majoritairement dans la seconde partie 20. En effet, le boîtier 10 est dissymétrique par rapport au plan 22, un premier volume délimité par ce boîtier 10 contenant le dispositif de commande 3 et s'étendant dans la seconde partie 20 étant plus important qu'un second volume délimité par le boîtier et s'étendant dans la première partie 21.

Le mouvement de rotation du réflecteur 14 est opéré au moyen d'un actionneur 23. Cet actionneur 23 peut être de type mécanique ou pneumatique mais l'application préférée par l'invention est de type électrique. Cet actionneur électrique comprend un moteur électrique et une pignonnerie assurant la transmission et la réduction du mouvement de rotation du moteur électrique.

Selon l'invention, l'actionneur 23 est installé par rapport au châssis 13 de telle sorte qu'il s'étende dans la première partie 21. On garantit ainsi l'absence d'interférence mécanique entre le dispositif lumineux 7, en particulier son dispositif de commande intégré 3, et l'actionneur 23.

L'actionneur 23 est particulièrement bien installé par rapport au dispositif lumineux quand l'actionneur 23 s'étend majoritairement, ou même entièrement, c'est-à-dire exclusivement, dans la première partie 21 du dispositif d'éclairage et/ou de signalisation selon l'invention, évitant ainsi tout risque d'interférence mécanique avec le dispositif lumineux 7.

En position montée, on comprend que l'actionneur 23 est solidarisé sur le châssis 13 dans une zone supérieure du dispositif d'éclairage et/ou de signalisation. Cette zone est connue pour être une zone chaude où il convient d'éviter d'installer tout composant électrique, tel qu'un actionneur par exemple. De manière surprenante, il a été constaté que la température au coeur de cette zone est abaissée par le fait que le dispositif de commande 3 est intégré à la source lumineuse. Une telle synergie permet de limiter l'importance des déperditions thermiques, ce qui autorise l'installation de l'actionneur dans la partie supérieure, ou première partie 21, du dispositif d'éclairage et/ou de signalisation selon l'invention.

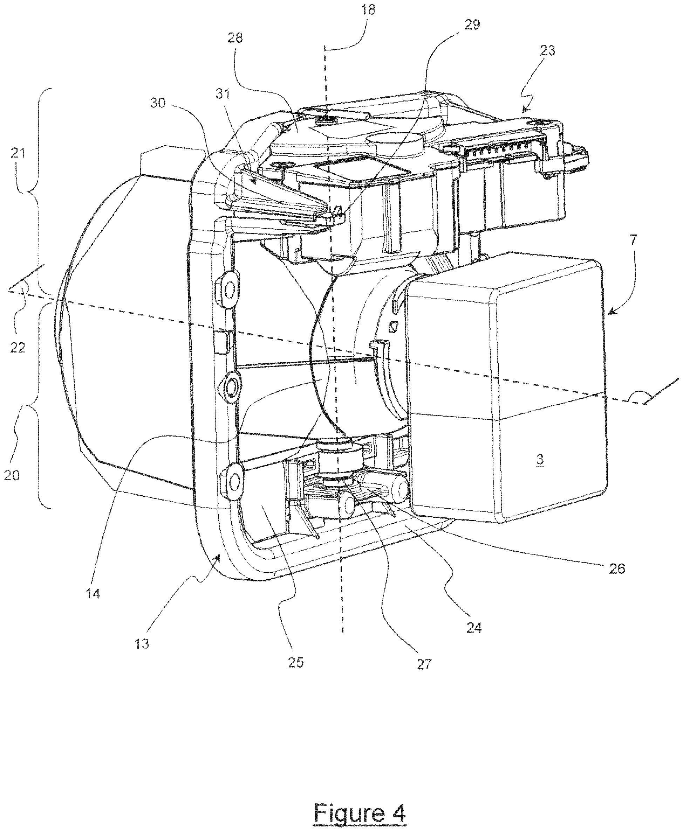

La figure 4 montre une perspective arrière d'un mode de réalisation du dispositif d'éclairage et/ou de signalisation selon l'invention.

Le châssis 13 présente une forme générale rectangulaire. Un premier bord 24 s'étend dans la seconde partie 20 selon une direction sensiblement parallèle au plan 22. Le réflecteur tourne autour de l'axe 18 au moyen d'un arbre constitué de deux demi-arbres installés de part et d'autre du réflecteur 14 de manière coaxiale avec l'axe 18.

Un plateau 25 reçoit un premier palier 26 issu de moulage directement avec le plateau 25. Ce palier 25 supporte un premier demi-arbre 27 solidaire du réflecteur 14. Ce premier demi-arbre 27 est formé par un tourillon circulaire autour d'une droite confondue à l'axe 18.

Pour faciliter les étapes d'assemblage du dispositif d'éclairage et/ou de signalisation de l'invention, le châssis 13 est dépourvu d'un second palier. Ce second palier est alors réalisé par l'actionneur 23. Ainsi, le réflecteur 14 comprend un second demi-arbre qui s'étend sur l'axe 18 de manière opposée au premier demi-arbre 27 par rapport au réflecteur 14. Le second palier est réalisé par une portion circulaire d'un boîtier 28 constitutif de l'actionneur 23, l'extrémité du second demi-arbre étant en prise sur la pignonnerie de l'actionneur 23.

La figure 4 montre encore la manière dont l'actionneur 23 est solidarisé sur le châssis 13. Le boîtier 28 de l'actionneur 23 comprend au moins un rail 29 issu de moulage lors de la fabrication du boîtier 28. Ce rail 29 est formé par une nervure rectiligne qui débouche d'une enveloppe définie par le boîtier 28 et s'étend dans un plan parallèle au plan 22. Avantageusement, l'actionneur peut comprendre deux rails 29 réalisés de part et d'autre du boîtier 28 de l'actionneur.

Ce rail 29 coulisse dans une glissière 30 issue du châssis 13. Cette glissière 30 prend la forme d'une rainure de section complémentaire à la section du rail 29. Cette rainure est pratiquée dans une excroissance 31 qui débouche d'un angle du châssis 13, dans un plan parallèle au plan 22. Bien entendu, l'invention prévoit autant de glissières 30 quand l'actionneur est équipé de rail 29.

Le montage du rail 29 dans la glissière 30 facilite le montage de l'actionneur 23 sur le support 13, tout en garantissant une bonne tenue mécanique entre ces deux composants.

Le dispositif d'éclairage et/ou de signalisation selon l'invention est complété par la présence d'un volet dont la fonction est de gérer la forme du faisceau lumineux projetée sur la route emprunté par le véhicule. Il s'agit, par exemple, d'un volet qui obstrue une partie du faisceau pour réaliser un faisceau en feu de croisement. Ce volet s'étend ainsi transversalement dans le faisceau lumineux émis par la source lumineuse. Le volet est mis en mouvement par un actuateur intégré au module lumineux au niveau du porte lentille 16.

On notera que le dispositif d'éclairage et/ou de signalisation selon l'invention trouve une application particulière quand celui-ci est installé dans un projecteur pour véhicule automobile.

## Revendications

1. Dispositif d'éclairage et/ou de signalisation comprenant un dispositif lumineux (7) comportant une source lumineuse (2) et un dispositif de commande (3) de ladite source, un châssis (13) et un réflecteur (14), ledit réflecteur (14) étant monté pivotant autour d'un axe (18) passant par le châssis (13) et mis en mouvement autour de l'axe (18) au moyen d'un actionneur (23) solidaire du châssis (13), ledit dispositif d'éclairage et/ou de signalisation étant partagé en une première partie (21) et une seconde partie (20) par un plan (22) passant par la source lumineuse (2) et perpendiculaire à l'axe (18), **caractérisé en ce que** le dispositif de commande (3) et la source lumineuse (2) forment un ensemble notamment unitaire où le dispositif de commande (3) s'étend majoritairement dans la seconde partie (20) alors que l'actionneur (23) s'étend dans la première partie (21).

2. Dispositif selon la revendication 1, dans lequel l'actionneur (23) s'étend majoritairement dans la première partie (21).

3. Dispositif selon la revendication 2, dans lequel l'actionneur (23) s'étend exclusivement dans la première partie (21).

4. Dispositif selon l'une des revendications 1 à 3, dans lequel la source lumineuse (2) est une lampe à décharge et le dispositif de commande (3) comprend un ballast d'alimentation électrique de la lampe à décharge.

5. Dispositif selon la revendication 4, dans lequel le dispositif de commande (3) comprend un boîtier (10), réalisé en un matériau conducteur d'électricité, qui enferme le ballast.

6. Dispositif selon l'une quelconque des revendications précédentes, dans lequel le réflecteur (14) comprend un arbre monté coaxial à l'axe (18), le châssis (13) comprenant un premier palier (26) de réception de l'arbre alors que l'actionneur (23) comprend un second palier de réception de l'arbre.

7. Dispositif selon l'une quelconque des revendications précédentes, dans lequel l'actionneur (23) est rendu solidaire du châssis (13) par au moins un rail (29) issu de l'actionneur (23) et monté coulissant dans une glissière (30) issue du châssis (13).

8. Dispositif selon l'une quelconque des revendications précédentes, dans lequel est prévu un volet de gestion du faisceau lumineux émis par la source lumineuse (2), ledit volet étant mis en mouvement par un actuateur intégré au module lumineux au niveau du porte lentille (16).

9. Projecteur pour véhicule automobile comprenant au moins un dispositif d'éclairage et/ou de signalisation selon l'une quelconque des revendications précédentes.
